# EUROPEAN PATENT APPLICATION

(11) **EP 4 195 470 A1**
(43) Date of publication of application: **14.06.2023**
(21) Application number: 21275181.2
(22) Date of filing: 10.12.2021
(51) Int. Cl.: H02K 11/26, H02H 1/04

(54) **MOTOR WITH TRANSIENT VOLTAGE SUPPRESSION**

(71) Applicant: Hamilton Sundstrand Corporation, Charlotte, NC 28217 (US)
(72) Inventor: ROADLEY-BATTIN, Jonathan, Birmingham (GB); PAGE, Andrew E, Tring (GB)
(74) Representative: Dehns

(57) **Abstract**

An electric motor comprising: a stator; a rotor; and a printed circuit board, pcb, mounted to an end of the motor, the motor end windings being provided as connections on the pcb; the motor further comprising transient voltage suppression, TVS, components (40) on the pcb.

## Description

### TECHNICAL FIELD

The present disclosure is concerned with an improved arrangement for providing transient voltage suppression e.g. for lightning strike protection for high power density motors.

### BACKGROUND

High power density motors and drives are used in many applications e.g. for electric propulsion, fuel pumping, actuation and other applications. Such high power density motors and drives are able to replace traditional hydraulic and pneumatic drives with electrical power to improve system functionality, reliability and maintainability. This has proved beneficial in many fields e.g. in aircraft where the trend is towards more electric aircraft, MEA, or all electric aircraft, AEA. Such drives/motors may operate at a high fundamental frequency. Because of this, high frequency losses can occur in different parts of the drive/motor. Particularly in fault tolerant machines, it is necessary to have complete electrical and magnetic isolation between different windings or winding channels so as not to propagate electrical faults through the system. This can be hard to achieve using conventional methods, as connections between coils of same phases have to pass over end windings of other phases or connections to form neutral points may pass over other end windings.

Losses can be addressed by, for example, using thinner laminations to form the stator or rotor core and/or by using multi-stranded wire (e.g. Litz wires) for the windings, so as to reduce eddy current effects, proximity effects and circulating currents within the conductor bundle, and the associated losses. The use and advantages of multi-strand wires in AC motors is well-known in the field and will not be described further here. Eddy currents in the magnets of permanent magnet motors can be reduced by segmenting the magnets in the radial and axial directions as is also known in the art.

In low frequency applications, multi-strand wire may be simplified to single core magnet wire, since eddy current losses are reduced.

Although known solutions exist for reducing losses in the core, coils and magnets, losses still arise due to connections between different parts of the drive/motor. It is difficult to make low resistance connections between different parts of the windings, or to connect windings in star configurations and/or to connect the windings to external system components. Connecting using soldering or brazing increases resistance and, therefore, introduces losses. Soldering or brazing multi-strand wires can take away from the advantageous effects of the multi-strand wire construction by fusing the individual wires together at the weld. Conventionally, in motors, windings are connected by passing leads from the different phases over end-windings which add bulk to the system and require additional insulation for electrical isolation.

To address these issues, it has recently become more common to provide the connection assembly for providing electrical connection of magnetic wire conductors to another component, as a printed circuit board, PCB, whereby the conductor can be connected to a conductive segment or track of the PCB which is also connected to the other component. More specifically, motors are now being designed where the end windings are provided in the form of a PCB.

The use of an end winding PCB is advantageous in several respects. In particular, it simplifies the final termination step of forming the motor and provides additional degrees of freedom regarding routing to any housing connectors etc.

Electric motors or machines, including those with PCB end windings, are generally connected to and driven by a motor drive. Conventionally, various functions are provided by the motor drive in addition to controlling the driving of the motor. Such functions include lightning strike protection components which motor and motor drive systems are, in many applications, required to have in order to satisfy industry regulations. In particular, lightning strike protection is required for cable bundle testing. Adding additional functions to the motor drive increases its size, weight, cost and complexity.

There is a desire to reduce the size, weight, cost and complexity of a motor and motor drive assembly.

### SUMMARY

The inventors have taken advantage of the use of PCB's used to form the end windings of a motor to incorporate some functions that are conventionally provided in the motor drive in the end winding PCB i.e. at the motor instead. The PCB is already used as the end winding and has the capability of including more functions without any increase in size or weight. This means that the components performing these features can be removed from the motor drive.

Specifically, according to this disclosure, the end winding PCB includes transient voltage suppression components to provide a lightning strike protection (LSP) function to the motor.

### BRIEF DESCRIPTION

Examples according to the disclosure will now be described with reference to the drawings. These are by way of example only and variations are possible within the scope of the claims.
Figure 1 shows a motor with an end winding PCB according to the disclosure.
Figure 2 shows a circuit diagram of one possible embodiment according to the disclosure.
Figure 3 shows a circuit diagram of another possible embodiment according to the disclosure.

### DETAILED DESCRIPTION

As is known, electric motors include a rotor and a stator, conductive coils and magnets, to generate electrical energy. Such motors are well known and will not be described in detail. Connections have to be made between the various windings in the motor as well as connections between the motor parts and external systems.

Many motors use multi-strand wire bundles to form the conductors for the windings so as to minimise eddy currents. It is difficult to connect such windings to each other or to other components without negating the multi-strand effect and/or creating an increased resistance at the connection that results in increased losses.

In conventional motors, different windings are electrically connected to each other by physically overlapping the windings and/or by providing end-windings extending from the ends of the motor where conductors of different phases of the motor pass over the end-windings to form a connection with each other. The end-windings are large and it is, as mentioned above, difficult to provide the necessary electrical and magnetic isolation when the conductors physically overlap each other. Connecting the conductors to other components of the motor or of external systems often uses soldering or brazing which fuses the multi-strand wires together at the ends of the coils.

More recently, motors have been designed in which connections for such conductors either to each other or to other components are provided by means of a printed circuit board (PCB) 10 and, in particular, a heavy copper PCB. The heavy copper PCB allows for the segmentation of the copper into a number of layers, allowing the PCB to be used at high frequencies and for electrical isolation between the different windings since the windings do not need to physically overlap in order to be electrically connected. Using a PCB enables, for example, the windings to be segmented and electrically connected via PCB traces, which improves their use in high frequency operations.

Further, the PCB 10 can be designed such that a bundle of multi-strand wires can be terminated with a stud or a crimp at the ends of the wires, and the stud or crimp providing a phase terminal 20 physically attached to the PCB by means of the stud without the need to solder or braze the wires. This allows for quick assembly and provides a lower resistance path and a more reliable connection than a solder or braze. Particularly at higher temperatures, soldered or brazed connections can fatigue and present a higher resistance path. Other interconnect technologies can also be adopted, depending on the application e.g. a compliant pin.

The use of a PCB as an interconnecting mechanism for all connections provides consistency and ease of design and manufacture. A heavy copper PCB is able to carry higher currents without problems of isolation or losses. The use of a PCB instead of overlapping of magnet wire end-windings also results in a more compact motor design.

The inventors have realised that when a PCB is used as the end winding of the motor, additional circuitry could be provided on the PCB to provide additional functions at the motor, without the need to add to the overall size and weight of the motor. This allows functions to be moved from the motor drive to the motor.

In particular, lightning strike protection features can be moved from the motor drive, as is conventionally the case, to the motor end winding PCB. More specifically, transient volt suppression (TVS) components 40 are mounted to the PCB 10.

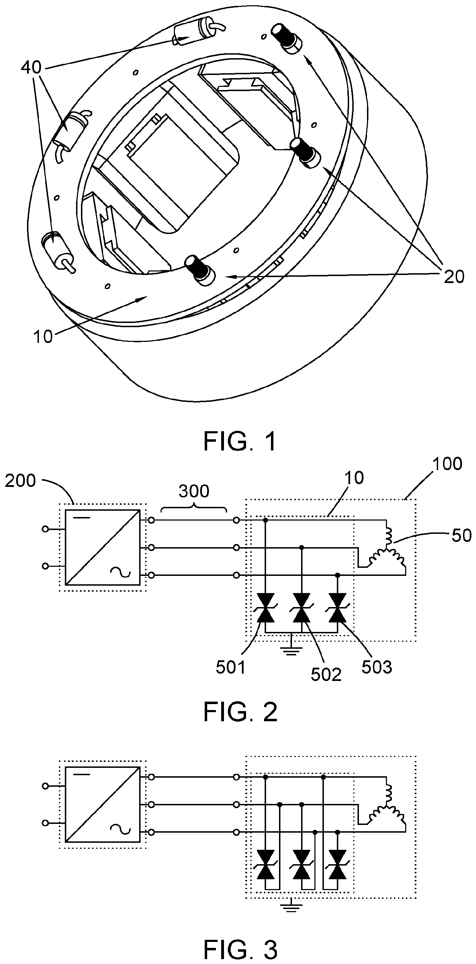

Circuit diagrams showing two possible implementations of the invention are shown in Figs. 2 and 3.

Figure 3 shows a possible arrangement for e.g. classical aircraft where common mode threat protection (e.g. lightning or other voltage surge protection) via the chassis can be provided. Fig. 2 shows the motor, or machine 100 which is connected to a motor drive 200 via cables (also called a harness) 300 for the phases of the motor. Fig. 2 shows a three phase motor represented by windings 50 to which the end winding PCB 10 is connected. A transient voltage suppression device 501, 502, 503 is connected to the PCB 10 between each phase and earth. Any suitable TVS device can be used.

For more modern aircraft, regulations prevent current being shunted through the chassis and so LSP can be provided using a differential mode topology such as shown in Fig. 3. The components are as described in relation to Fig. 2 except, rather than being earthed through the chassis, the TVS devices are connected as shunts across the phase lines.

Present industry standards may make it not yet feasible to use such an arrangement for aircraft, since, currently, any part of an aircraft that has a connector must be threat tested and each pin has to be struck, in testing, to simulate a lightning strike. Future developments in the aircraft industry, however, may make it more feasible to use such an arrangement for LSP in aircraft. The arrangement of the invention also, however, has other applications e.g. in the automotive industry.

The advantage of the invention is that functionality can be distributed to a line replaceable unit (LRU) - i.e. the end winding PCB which is, in any case, present and typically has additional unused space/volume that can be utilised.

## Claims

1. An electric motor comprising:
a stator;
a rotor; and
a printed circuit board, pcb, mounted to an end of the motor, the motor end windings being provided as connections on the pcb; the motor further comprising transient voltage suppression, TVS, components (40) on the pcb.

2. An electric motor as claimed in claim 1, wherein the pcb is a heavy copper pcb.

3. An electric motor as claimed in claim 1 or 2, wherein the pcb has multiple layers.

4. An electric motor as claimed in any preceding claim, the motor being a three-phase motor, the motor comprising three TVS components (40), each TVS component connected between a respective phase line and earth.

5. An electric motor as claimed in any of claims 1 to 3, the motor being a three-phase motor, the motor comprising three TVS components (40), each TVS component connected as a shunt across a respective phase line.

6. An electric motor as claimed in any of claims 1 to 5, the motor being an aircraft engine.

7. An electric motor as claimed in any of claims 1 to 6, the TVS components arranged to provide lightning strike protection.

8. A motor and motor drive assembly comprising a motor drive and an electric motor as claimed in any preceding claim, the motor drive connected to the motor via cables.

9. A method of protecting an electric motor from transient voltage suppression, the method comprising providing transient voltage suppression components (40) on a printed circuit board, providing end winding structures on the printed circuit board, connecting the printed circuit board at the end of the electric motor.
